**Europäisches Patentamt**

**European Patent Office**

**Office européen des brevets**

(19)

(11) Veröffentlichungsnummer : **0 452 715 B1**

(12)

# EUROPÄISCHE PATENTSCHRIFT

(45) Veröffentlichungstag der Patentschrift :
**27.07.94 Patentblatt 94/30**

(51) Int. Cl.$^5$ : **H02M 5/257**

(21) Anmeldenummer : **91104830.4**

(22) Anmeldetag : **26.03.91**

(54) **Vorrichtung zur stufenlosen Steuerung elektrischer Verbraucher nach dem Phasenanschnittprinzip, insbesondere Helligkeitsregler und Verwendung einer solchen Vorrichtung.**

(30) Priorität : **17.04.90 DE 4012254**

(43) Veröffentlichungstag der Anmeldung :
**23.10.91 Patentblatt 91/43**

(45) Bekanntmachung des Hinweises auf die
Patenterteilung :
**27.07.94 Patentblatt 94/30**

(84) Benannte Vertragsstaaten :
**AT DE FR GB IT NL**

(56) Entgegenhaltungen :
**WO-A-86/01365**
**DE-A- 2 429 763**
**GB-A- 2 217 123**
**US-A- 4 739 226**

(73) Patentinhaber : **SIEMENS**
**AKTIENGESELLSCHAFT**
**Wittelsbacherplatz 2**
**D-80333 München (DE)**

(72) Erfinder : **Draxelmayr, Dieter, Dr.**
**Tschinowitscherweg 46**
**A-9500 Villach (AT)**

EP 0 452 715 B1

## Beschreibung

Die Erfindung betrifft eine Vorrichtung zur stufenlosen Steuerung elektrischer Verbraucher nach dem Phasenanschnittprinzip gemäß dem Oberbegriff des Patentanspruches 1 und deren Verwendung.

Vorrichtungen zur stufenlosen Steuerung elektrischer Verbraucher nach dem Phasenanschnittprinzip sind prinzipiell bekannt und unter anderem beschrieben in der DE-OS 23 62 225, der DE-PS 24 29 763, der DE-PS 25 43 370 sowie dem Artikel "elektronischer Helligkeitsregler mit Berührtaste" von Kern/Strehle, 8136 Bauteile-Report Siemens, Jahrgang 15/Nr. 5 (1977.10), Seiten 168 bis 170. Solche Vorrichtungen weisen üblicherweise im Hauptstromweg ein Halbleiter-Schaltelement, beispielsweise ein Triac auf. Dieses Halbleiter-Schaltelement wird durch Zündimpulse angsteuert, so daß der Strom im Hauptstromweg bzw. der Ausgangsstrom dieser Steuervorrichtung in Abhängigkeit vom Phasenwinkel des Zündimpulses steuerbar ist. Die DE-OS 38 36 128 zeigt eine Helligkeitssteuerungsschaltung für Glühlampen, wobei anstelle eines Triacs ein selbstsperrender Feldeffekttransistor vorgesehen ist.

Wenn die elektrische Last, die von einer solchen Vorrichtung angesteuert wird, eine andere Betriebsspannung aufweist als die Netzspannung von der diese besagte Vorrichtung gespeist wird, so kann zum Umsetzen der Spannung ein Transformator vorgesehen werden. Bei solchen Schaltungen speist die Steuervorrichtung die Primärwicklung des Transformators so, als ob die Primärwicklung eine übliche Last darstellen würde. Im Sekundärkreis dieses Transformators ist dann die eigentliche, mit einer anderen Betriebsspannung betriebene Last angeordnet. Eine solche Last kann beispielsweise eine Halogenlampe sein, die mit Niederspannung betrieben wird und aus einem öffentlichen Netz mit beispielsweise 220 V Wechselspannung über einen Transformator gespeist wird und von einer Steuervorrichtung stufenlos steuerbar ist. Bei ordnungsgemäß funktionierender Lampe stellt eine Schaltungsanordnung, bestehend aus einer Lampe im Sekundärkeis eines Transformators und mit der Primärwicklung dieses Transformators als Last für die Steuervorrichtung eine nahezu ohmsche Last dar. Spannung und Strom sind in Phase, ein Betrieb mit konventionellen oben beschriebenen Steuervorrichtungen ist somit möglich.

Wenn bei einer solchen Anordnung die Lampe ausfällt, kann es zu folgenden Störungen kommen:
- In Abhängigkeit vom Zündzeitpunkt der Steuervorrichtung kann ein sehr hoher Magnetisierungsstrom im Transformator fließen. Wenn das wiederholt, beispielsweise in Folge mehrerer aufeinanderfolgender Zündimpulse am Leistungsschalter auftritt, so kann dadurch unter anderem der Transformator zerstört werden.
- Wenn aufgrund eines ungünstigen Zündzeitpunktes bei der Aufmagnetisierung der Transformatorkern magnetisch gesättigt ist, führt dies in Folge der dann nur noch ohmschen Last der Wicklung zu Stromspitzen, insbesondere wenn die Sekundärwicklung leer läuft. Auch dadurch kann der Transformator zerstört werden. Solche Störungen werden von bekannten Vorrichtung zur Steuerung einer elektrischen Last zumindest dann, wenn diese in Zweidraht-Technik arbeitet, nicht mit ausreichender Sicherheit verhindert.

Es sind Applikationsbeispiele für die Verwendung von bekannten Steuervorrichtungen denkbar, wobei beispielsweise ein Wärmefühler am Transformator angeordnet ist, der bei Überschreiten einer zulässigen Transformatortemperatur weitere Zündimpulse an der Steuervorrichtung unterbindet. Außerdem ist es denkbar, den im elektrischen Verbraucher fließenden Strom zu detektieren und bei Überschreiten eines zulässigen Maximalstromes abzuschalten.

Die DE-OS 38 39 373 beschreibt eine Helligkeitssteuerschaltung nach der DE 38 36 128 mit einer Schutz- und Begrenzungsschaltung, wobei der Ausgangsstrom der Helligkeitssteuerschaltung gemessen wird und bei Überschreiten eines Grenzwertes abgeschaltet wird. Solche Schutzschaltungen reagieren allerdings bei ungünstigem Stromführungswinkel im Störfall nicht immer zuverlässig. Eine zuverlässige solche Schaltung enthält eine Schmelzsicherung, die bei einem Lampenausfall jeweils ausgetauscht werden muß, so daß eine solche Schaltung sehr unkomfortabel ist.

Die Aufgabe der Erfindung ist es, bekannte Vorrichtungen zur Steuerung elektrischer Verbraucher dahingehend zu verbessern, daß die oben genannten Störungen mit ausreichender Sicherheit verhindert werden.

Diese Aufgabe wird gelöst durch eine Vorrichtung mit den Merkmalen des Patentanspruches 1. Eine günstige Verwendung dieser Vorrichtung wird im Patentanspruch 2 angegeben.

Um die Erläuterung der Erfindung zu vereinfachen, werden nachstehend einige Begriffe definiert: Bei einer Vorrichtung zur stufenlosen Steuerung elektrischer Verbraucher nach dem Phasenanschnitt-Prinzip, bei der also beispielsweise ein Triac, eine Thyristoranordnung oder eine Schalttransistoranordnung in Serie mit einer von ihnen angesteuerten Last an einer Wechselspannungsquelle betrieben werden, sei unter dem Ansteuerwinkel fia der Zündzeitpunkt des Triacs, des Thyristors oder des Transistors verstanden, bezogen auf den Nulldurchgang der Wechselspannung. Der Stromführungswinkel fib sei die Stromführungsdauer einer Halbwelle (positiv oder negativ), angegeben in einem Winkelmaß und bezogen auf den Wechselspannungsverlauf. Diese Stromführungsdauer wird eingeleitet durch den Ansteuerwinkel fia und beendet durch den Strom-Nulldurchgangswinkel. Die Stromführungsdauer der Halbwelle im Zeitmaß (Sekunden) kann bei bekannter Frequenz der Wechselspannung aus dem Stromführungswinkel fib ermittelt werden.

Speist eine Vorrichtung, die nach dem Phasenanschnitts-Prinzip arbeitet, eine rein ohmsche Last, so beginnt die Stromführungsdauer mit dem Ansteuerwinkel fia und endet mit dem Nulldurchgang der Wechselspannung. Der maximal erreichbare Stromführungswinkel ist somit bei fia = 0° gegeben durch $fib_{max}$ = 180°. In diesem Fall fließt der gleiche Strom, als würde die Last unmittelbar an der Wechselspannungsquelle betrieben.

In dem Siemens-Fachbuch "Stromrichtertechnik" von G. Möltgen, 1983, ist auf Seite 68 in Bild 2.42 der Verlauf des über Wechselstromsteller mit Anschnittsteuerung gesteuerten Stromes bei rein induktiver Last für verschiedene Ansteuerwinkel fia dargestellt. Das gleiche Buch zeigt auf Seite 64 in Bild 2.39 den Verlauf des über Wechselstromsteller mit Anschnittsteuerung gesteuerten Stromes bei einer ohmsch-induktiven Last. Aus dem besagten Bild 2.42 ist zu erkennen, daß bei rein induktiver Last folgender Zusammenhang zwischen dem Stromführungswinkel fib und dem Ansteuerwinkel fia besteht:

$$fib = 2(180° - fia).$$

Bei rein induktiver Last steigt der Strom ab dem Ansteuerwinkel fia an, hat ein Maximum in Spannungs-Nulldurchgang und fällt dann analog zur Anstiegsphase ab. Der bei rein ohmscher Last maximal erreichbare Stromverlauf wird bei einer rein induktiven Last, abgesehen von einer Phasenverschiebung um 90° mit einem Ansteuerwinkel fia von 90° erzielt. Hat die Last einen ohmschen und einen induktiven Anteil, so wird dieser bei rein ohmscher Last maximal erreichbare Stromverlauf, abgesehen von einer Phasenverschiebung, je nach dem Verhältnis von induktivem und ohmschem Anteil mit einem Ansteuerwinkel fia erzielt, der zwischen 0° und 90° liegt. In dem im besagten Bild 2.39 gewählten Beispiel ist der entsprechende Ansteuerwinkel fia = 45°.

Die Erfindung geht von der Überlegung aus, daß die oben beschriebenen störend hohen Strom spitzen bei einer Vorrichtung zur stufenlosen Steuerung elektrischer Verbraucher nach dem Phasenanschnitts-Prinzip nur auftreten, wenn an die Steuereinrichtung eine induktive Last angeschlossen ist. Erfindungsgemäß wird die Stromführungsdauer bzw. der Stromführungswinkel fib als Kriterium für das Erkennen eines unerlaubt hohen Stromes vorgesehen.

Wesentlich für die vorliegende Erfindung ist, daß eine Vorrichtung zur stufenlosen Steuerung elektrischer Verbraucher nach dem Phasenanschnitt-Prinzip derart ausgestaltet ist, daß der Stromführungswinkel als Indikator der Last (ohmsch oder induktiv) vorgesehen ist und daß die Last bei Überschreiten eines vorgegebenen Grenzwertes des Stromführungswinkels nicht mehr mit Spannung versorgt wird, indem beispielsweise eine weitere Ansteuerung des Halbleiter-Schaltelementes verhindert wird.

Die Wahl dieses Grenzwertes hängt vornehmlich von der verwendeten Last ab. Ist die Last für den Einsatz in einem Wechselspannungsnetz ohne Steuervorrichtung nach dem Phasenanschnitts-Prinzip vorgesehen, so ist als Grenzwert beispielsweise ein Stromführungswinkel von 180° sinnvoll. Bei rein ohmscher Last ist dann ein Ansteuerwinkel fia zwischen 0° und 180° möglich, bei rein induktiver Last ein Ansteuerwinkel fia zwischen 90° und 180°.

Je nach dem Prinzip der Stromführungswinkel-Detektion kann aufgrund der Spannungs-Nulldurchgänge bei 0°, 180° und 360° die Detektion eines Stromführungswinkels unmittelbar im Bereich von 180° problematisch oder störanfällig sein. Deshalb kann es sinnvoll sein, den Grenzwert des Stromführungswinkels von 180° abweichend zu wählen. Außerdem kann es sinnvoll sein, den maximal zulässigen Stromführungswinkel größer bzw. kleiner als 180° zu wählen, wenn die Last eine größere bzw. kleinere Stromfestigkeit (auch im Störfall) aufweist.

Nachfolgend wird die Erfindung anhand der Figuren näher erläutert. Funktionsgleiche Schaltungsteile sind in den Figuren mit den gleichen Bezugszeichen versehen. Die einzelnen Bezugszeichen entsprechen hierbei folgenden Schaltungseinheiten:

| | |
|---|---|
| 1 | Steuervorrichtung (Vorrichtung zur Steuerung von 2) |
| 2 | Elektrischer Verbraucher |
| 3 | Transformator |
| 4 | Ohmsche Last, Lampe |
| 5 | Halbleiter-Schaltelement, Triac |
| 6 | Ansteuerschaltung |
| U | Wechselspannungsquelle |
| L | Logikschaltung |
| SD | Stromflußdetektor |
| T | Zeitabhängiger Schaltungsteil |
| D | Schalt- und Treibereinheit |
| PLL | Zündimpuls-Vorerzeugerschaltung, Phasenregelschleife |

| C | Zählerschaltung |
|---|---|
| C1 | Taktgenerator |
| CE | Zähler-Grundelement |
| IV, IV1 | Invertierer |
| AND | AND-Gatter |
| NOR1 | NOR-Gatter |
| NOR2 | NOR-Gatter |
| MF | Monoflop |
| FF | D-Flip-Flop |
| a, c | Anschlußklemme |
| b | Zündimpuls-Ausgangsklemme |
| h | Ausgangsklemme |
| d, e, f, g | Signaleingangsklemme |

Es zeigt:

Figur 1     als Prinzipschaltbild eine Vorrichtung 1 zur Steuerung eines elektrischen Verbrauchers nach dem Phasenanschnittsprinzip, die in Zweidrahtanordnung mit einem elektrischen Verbraucher 2 in Serie geschaltet ist und eine diese speisende Wechselspannungsquelle U. Hierbei weist die Steuervorrichtung 1 ein Halbleiter-Schaltelement 5 und eine dieses ansteuernde Ansteuerschaltung 6 auf.

Figur 2     als Prinzipschaltbild eine mögliche Ausführungsform der Ansteuerschaltung 6 nach Figur 1 mit einem Zählerbaustein C und einer Logikschaltung L.

Figur 3     als Prinzipschaltbild eine mögliche Ausführungsform des Zählerbausteins C und der Logikschaltung L nach Figur 2.

Figur 4     als Prinzipschaltbild eine weitere mögliche Ausführungsform der Ansteuerschaltung 6 nach Figur 1.

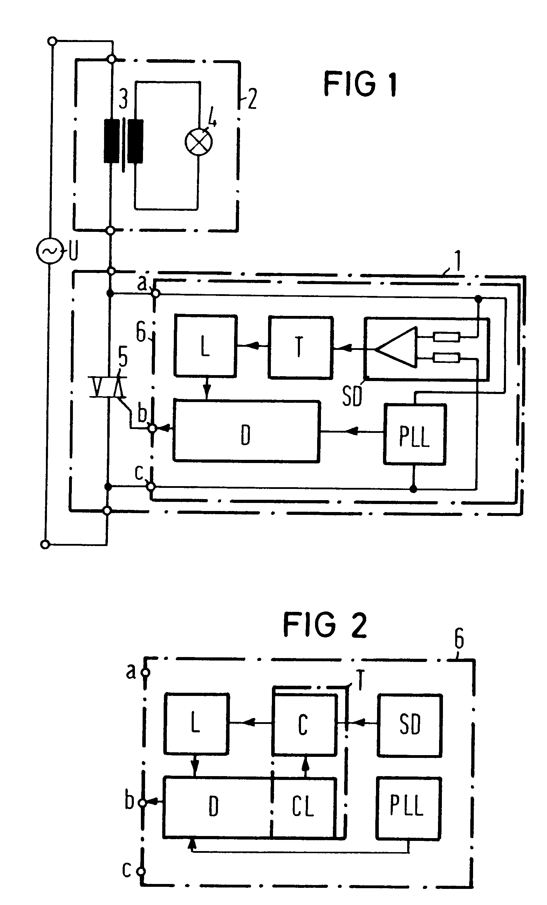

In Figur 1 speist eine Wechselspannungsquelle U einen elektrischen Verbraucher 2. Als Ausführungsbeispiel eines elektrischen Verbrauchers ist hierbei ein Transformator 3 gezeigt, dessen Primärwicklung von der Wechselspannungsquelle U gespeist wird und an dessen Sekundärwicklung ein ohmscher Verbraucher, beispielsweise eine Lampe 4 angeschlossen ist. Die Primärwicklung des Transformators 3 ist hierbei unmittelbar an eine Anschlußklemme der Wechselspannungsquelle U angeschlossen und über eine Steuervorrichtung 1 an die andere Anschlußklemme dieser Wechselspannungsquelle U geschaltet. Hierbei ist ein Halbleiter-Schaltelement 5 derart in den Strompfad zwischen Wechselspannungsquelle U und elektrischem Verbraucher 2 geschaltet, daß es den Stromfluß steuern kann. In Figur 1 ist als Halbleiter-Schaltelement 5 ein Triac dargestellt. Dieses Triac wird von einer Ansteuerschaltung 6 über eine Zündimpuls-Ausgangsklemme b angesteuert. Die Ansteuerschaltung 6 ist über eine Anschlußklemme a auf der einen Seite des Halbleiter-Schaltelements 5 angeschlossen und über eine Anschlußklemme c auf der anderen Seite des Halbleiter-Schaltelementes 5 angeschlossen. Die Ansteuerschaltung beinhaltet einen Stromflußdetektor SD. Hierbei handelt es sich um einen Schaltungsteil, der an seinem Ausgang ein Logiksignal bereitstellt, wenn durch das Halbleiter-Schaltelement 5 und somit durch den elektrischen Verbraucher 2 ein Strom fließt. Stromflußdetektoren sind bekannt. Sie können unter anderem unter Zuhilfenahme einer Stromfühlwicklung im Stromkreis oder eines Stromfühl-Widerstandes im Stromkreis mit einer entsprechenden Auswerteschaltung realisiert sein. In Figur 1 ist als Prinzipschaltbild eine besonders einfache Schaltung gezeigt. Eine Komparator-Schaltung mit betragsbildendem Eingang liefert dann an seinem Ausgang einen bestimmten Logikpegel, wenn der Betrag der über dem Halbleiter-Schaltelement 5 anstehenden Spannung einen bestimmten Mindestwert unterschreitet. Der Signalausgang dieses Stromflußdetektors SD ist an einen zeitabhängigen Schaltungsteil T geschaltet. Dieser zeitabhängige Schaltungsteil T gibt nach Ablauf einer bestimmten Zeitdauer ein Signal an eine Logikschaltung L ab. Diese bestimmte Zeitdauer legt in Abhängigkeit von der Wechselspannunsfrequenz der Spannungsquelle U den maximal zulässigen Stromflußwinkel fib fest. Ist die tatsächliche Stromflußdauer kürzer als die maximal zulässige Stromflußdauer, so wird der zeitabhängige Schaltungsteil T von dem Ausgangssignal des Stromflußdetektors SD zurückgesetzt. Die Zeit in dem zeitabhängigen Schaltungsteil T beginnt dann erst wieder zu laufen, wenn der Stromflußdetektor SD das Fließen eines Stromes im elektrischen Verbraucher 2 bzw. im Halbleiter-Schaltelement 5 anzeigt. Wird die maximal zulässige Stromflußdauer überschritten, so gibt die Logikschaltung L ein Unterbrechungssignal an eine Schalt- und Treibereinheit D und unterbindet das weitere Ansteuern des Halbleiter-Schaltelementes 5. Die Schalt- und Treibereinheit D erhält von einer Zündimpuls-Vorerzeugerschaltung PLL in Abhängigkeit von üblicherweise extern einstellbaren Bedingungen Zündimpulsvorschläge, wobei diese Zündimpulse einen entsprechend vorgegebenen Ansteuerwinkel fia aufweisen. Die von der Zündimpuls-Vorerzeugerschaltung PLL bereitgestellten Zündimpuls-Vorschläge werden von der Schalt- und Treibereinheit D unter anderem in Abhängigkeit vom Zustand des Ausgangssignales der Logikschaltung L verstärkt an den Steuereingang bzw. die Steuereingänge des Halbleiter-Schaltelementes geschaltet. Die Zündimpuls-Vorerzeugerschaltung PLL kann hierbei in bekannter Weise ausgeführt sein. In modernen Steuervorrichtungen enthält die Zündimpuls-Vorerzeugerschaltung üblicherweise eine Phasenregelschleife (phase locked loop), dies ist jedoch nicht unbedingt erforderlich.

Figur 2 zeigt eine mögliche Ausgestaltungsform der Ansteuerschaltung 6 nach Figur 1, wobei der zeitabhängige Schaltungsteil T insbesondere aus einer Zählerschaltung C und einem diese speisenden Taktgenerator C1 gebildet wird. Der Taktgenerator C1 kann, wie in Figur 2 dargestellt, Bestandteil der Schalt- und Treibereinheit D sein. In Figur 2 ist das Ausgangssignal eines Stromflußdetektors SD als Eingangssignal für eine Zählerschaltung C vorgesehen, die mit dem Takt eines Taktgenerators C1 zählt. Wenn der Stromflußdetektor SD einen Stromfluß signalisiert, beginnt die Zählerschaltung C zu zählen. Wenn der Stromflußdetektor SD das Ende des Stromflusses an die Zählerschaltung C signalisiert, wird der Zählerstand zurückgesetzt. Erreicht die Zählerschaltung C einen vorgegebenen Zählerstand, der in Abhängigkeit von der Frequenz des Taktgenerators und der Frequenz der Wechselspannungsquelle U einem maximal zulässigen Stromflußwinkel entspricht, bevor die Beendigung des Stromflusses die Zählerschaltung C zurückgesetzt hat, so gibt diese ein Signal an eine Logikschaltung L weiter. Die Logikschaltung L veranlaßt dann, daß die Schalt- und Treibereinheit D keine weiteren Zündimpulse an der Zündimpuls-Ausgangsklemme b bereitstellt. Als Zählerschaltung C kann ein beliebiger Zähler nach dem Stande der Technik verwendet werden. Es sind Binärzähler, aber auch andere Zähler einsetzbar.

Selbstverständlich kann die Zündimpuls-Ausgangsklemme b auch aus zwei Anschlüssen bestehen, die ein Halbleiter-Schaltelement für die positive Halbwelle und ein Halbleiter-Schaltelement für die negative Halbwelle ansteuern.

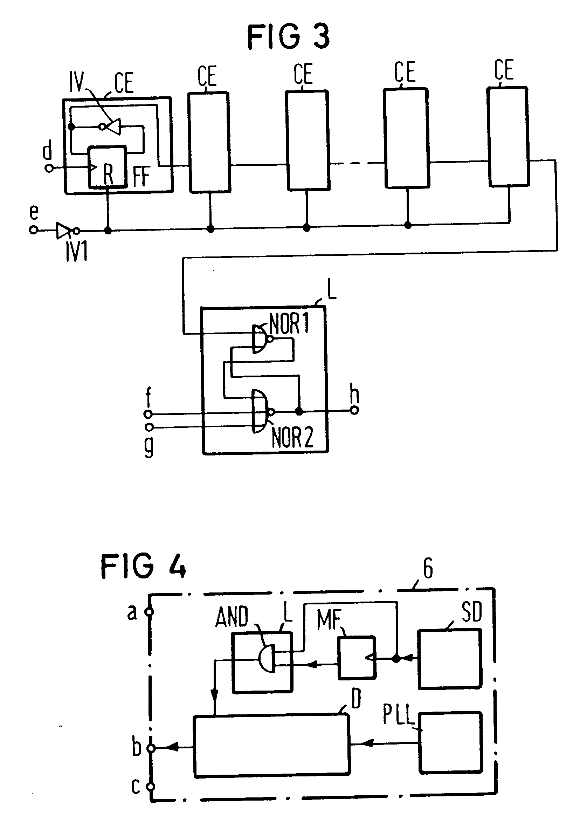

Figur 3 zeigt als Ausführungsbeispiel eine Zählerschaltung, gebildet aus mehreren Zähler-Grundelementen CE sowie eine Logikschaltung L, wie sie in Figur 2 eingesetzt werden können. Ein Zähler-Grundelement CE kann hierbei aus einem rücksetzbaren D-Flipflop FF bestehen, dessen Rücksetzeingang R, eventuell unter Zwischenschaltung einer Invertiererschaltung IV1, an eine Signaleingangsklemme e geschaltet ist, die mit dem Ausgangssignal eines Stromflußdetektors SD beaufschlagbar ist. Der Ausgang des D-Flipflops FF ist über eine Invertierschaltung IV an den D-Eingang des Flipflops FF geschaltet. Der D-Eingang des Flipflops FF bildet außerdem den Ausgang eines Zähler-Grundelementes CE. Den Eingang eines Zähler-Grundelementes CE bildet der Clock-Eingang des D-Flipflops FF. Die Zählerschaltung nach Figur 3 wird gebildet aus mehreren Zähler-Grundelementen CE, die derart in Serie geschaltet sind, daß immer der Ausgang eines Zähler-Grundelementes CE an den Eingang des nächsten Zähler-Grundelementes CE geschaltet ist, daß der Eingang des ersten Zähler-Grundelementes CE über eine Signaleingangsklemme d mit einem Taktsignal beaufschlagt wird, daß der Ausgang des letzten Zähler-Grundelementes CE der Reihenschaltung den Ausgang der Zählerschaltung bildet und daß die Rücksetzeingänge R aller Zähler-Grundelemente CE zusammengeschaltet sind.

Das in Figur 3 gezeigte Ausführungsbeispiel einer Logikschaltung L beinhaltet ein erstes NOR-Gatter NOR1 und ein zweites NOR-Gatter NOR2. Das erste NOR-Gatter NOR1 weist zwei Eingänge auf, wobei einer dieser Eingänge mit dem Ausgangssignal der Zählerschaltung beaufschlagt wird und der andere dieser Eingänge an die Ausgangsklemme h der Logikschaltung L geschaltet ist. Der Ausgang des ersten NOR-Gatters NOR1 ist an einen Eingang des zweiten NOR-Gatters NOR2 geschaltet. Der Ausgang des zweiten NOR-Gatters NOR2 ist mit der Ausgangsklemme der Logikschaltung L verbunden. In dem Ausführungsbeispiel nach Figur 3 ist das zweite NOR-Gatter NOR2 mit drei Eingängen versehen, wobei zwei dieser Eingänge jeweils an eine Signaleingangsklemme f und g angeschlossen sind. Eine logische 1 an einer der Signaleingangsklemmen f oder g führt unabhängig voneinander zum Rücksetzen der Logikschaltung L, falls diese eine logische 1 an der Ausgangsklemme h bereitstellt. Durch ein zweites NOR-Gatter NOR2 mit drei Eingängen ist es somit möglich, die Logikschaltung L sowohl automatisch als auch manuell über getrennte Signaleingänge rückzusetzen. An die Signaleingangsklemme f kann beispielsweise bei jedem Einschalten der Steuervorrichtung eine logische 1 zum Rücksetzen der Logikschaltung L angelegt werden, über die Signaleingangsklemme g kann bedarfsweise ein manueller Reset erfolgen. Prinzipiell kann das zweite NOR-Gatter NOR2 jedoch auch als ein NOR-Gatter mit nur zwei Eingängen ausgebildet sein.

Das zweite NOR-Gatter NOR2 liefert dann an den Ausgang der Logikschaltung L eine logische 1, wenn an allen seinen Eingängen eine logische O ansteht. Wenn die Signaleingangsklemmen f und g mit logischem O-Pegel beaufschlagt sind, stellt die Logikschaltung L dann eine logische 1 am Ausgang bereit, wenn das erste NOR-Gatter NOR1 einen logischen O-Pegel an seinem Ausgang abgibt. Das ist dann der Fall, wenn die Zählerschaltung C eine logische 1 an das erste NOR-Gatter NOR1 schaltet sowie, wenn das zweite NOR-Gatter NOR2 eine logische 1 an seinem Ausgang bereitstellt. Damit ist sichergestellt, daß die Logikschaltung an der Ausgangsklemme h ein Sperrsignal solange bereitstellt, bis sie rückgesetzt worden ist.

Figur 4 zeigt als Prinzipschaltbild eine weitere mögliche Ausführungsform der Ansteuerschaltung 6 nach Figur 1, wobei als zeitabhängiger Schaltungsteil T ein flankengetriggertes Monoflop MF vorgesehen ist. Das Ausgangssignal eines Stromflußdetektors SD wird an den Eingang dieses Monofloß MF sowie an einen Eingang der Logikschaltung L geschaltet. In der Ausführungsform nach Figur 4 ist als mögliche Ausführungsform einer Logikschaltung L ein AND-Gatter AND mit zwei Eingängen vorgesehen. Der Ausgang des Monoflops MF ist an den zweiten Eingang der Logikschaltung L und somit an einen der Eingänge des AND-Gatters AND geschaltet. Der Ausgang der Logikschaltung L ist an die Schalt- und Treibereinheit D angeschlossen, die in Abhängigkeit vom Ausgangssignal der Logikschaltung L von der Zündimpuls-Vorerzeugerschaltung PLL vorgeschlagene Zündimpulse verstärkt an die Zündimpuls-Ausgangsklemme b weiterschaltet. Wenn der Stromflußdetektor SD in Figur 4 einen Stromfluß signalisiert, so beginnt mit der steigenden Flanke des Ausgangssignales des Stromflußdetektors SD die Verzögerungszeit des Monoflop MF zu laufen. Wenn aufgrund der Beendigung des Stromflusses der Ausgang des Stromflußdetektors SD auf O-Pegel geht bevor die Verzögerungszeit im Monoflop abgelaufen ist und diese somit an seinem Ausgang ein 1-Potential bereitstellt, so gibt die Logikschaltung L kein Sperrsignal an die Schalt- und Treibereinheit D weiter. Wenn jedoch sowohl der Ausgang des Stromflußdetektors SD als auch der Ausgang des Monofloß MF jeweils an das UND-Gatter AND eine 1 schalten, so gibt die Logikschaltung L ein Sperrsignal an die Schalt- und Treibereinheit D und unterbindet somit ein weiteres Durchschalten von Zündimpulsen an die Zündimpuls-Ausgangsklemme b. Die Zeitkonstante des Monoflop MF legt hierbei in Abhängigkeit von der Frequenz der Wechselspannungsquelle U die maximal zulässige Stromführungsdauer fest.

Eine erfindungsgemäße Vorrichtung eignet sich insbesondere für die stufenlose Helligkeitssteuerung von Glühlampen, die in den Sekundärkreis eines Transformators geschaltet sind, wenn die Primärwicklung dieses Transformators von der erfindungsgemäßen Steuervorrichtung an einer Wechselspannungsquelle angesteuert wird.

## Patentansprüche

1. Vorrichtung (1) zur stufenlosen Steuerung elektrischer Verbraucher nach dem Phasenanschnittprinzip mit einem Halbleiter-Schaltelement (5) und einer Ansteuerschaltung (6) zum Bereitstellen von für die Ansteuerung des Halbleiter-Schaltelementes (5) vorgesehenen Zündimpulsen, wobei diese Ansteuerschaltung (6) mindestens einen Stromflußdetektor (SD), eine Zündimpuls-Vorerzeugerschaltung (PLL), ein zeitabhängiges Schaltungsteil (T) und eine Schalt- und Treibereinheit (D) beinhaltet,
**dadurch gekennzeichnet,**
daß mit Hilfe des Stromflußdetektors (SD) und des zeitabhängigen Schaltungsteiles (T) der Stromführungswinkel jeder Stromhalbwelle mit einem maximal zulässigen Grenzwert des Stromführungswinkels verglichen wird und daß ein weiteres Ansteuern des Halbleiterschaltelementes (5) bei Überschreiten dieses maximal zulässigen Grenzwertes des Stromführungswinkels unterbunden wird.

2. Verwendung einer Vorrichtung nach dem vorhergehenden Anspruch zur Steuerung der Helligkeit einer Glühlampe (4), wobei die Glühlampe an die Sekundärwicklung eines Transformators (3) angeschlossen ist, wobei ein Anschluß der Primärwicklung des Transformators (3) an einen Pol einer Wechselspannungsquelle (U) angeschlossen ist, wobei der andere Anschluß der Primärwicklung des Transformators (3) an eine Hauptelektrode des Halbleiter-Schaltelementes (5) angeschlossen ist und wobei die andere Hauptelektrode dieses Halbleiter-Schaltelementes (5) an den anderen Pol der Wechselspannungsquelle (U) geschaltet ist.

## Claims

1. Device (1) for the stepless control of electrical loads according to the phase angle principle, having a semiconductor switch element (5) and a trigger circuit (6) for furnishing turn-on pulses intended for triggering the semiconductor switch element (5), this trigger circuit (6) including at least one current flow detector (SD), a turn-on pulse pregenerator circuit (PLL), a time-dependent circuit element (T) and a switch and driver unit (D), characterized in that by means of the current flow detector (SD) and of the time-dependent circuit element (T), the on-state angle of each current halfwave is compared with a maximum permissible limiting value of the on-state angle, and in that a further triggering of the semiconductor switch element (5) is prevented where this maximum permissible limiting value of the on-state angle is exceeded.

2. Use of a device according to the preceding claim for controlling the brightness of an incandescent lamp (4), the incandescent lamp being connected to the secondary winding of a transformer (3), a connection of the primary winding of the transformer (3) being connected to a pole of an alternating voltage source (U), the other connection of the primary winding of the transformer (3) being connected to a main electrode of the semiconductor switch element (5) and the other main electrode of this semiconductor switch element (5) being connected to the other pole of the alternating voltage source (U).

## Revendications

1.  Dispositif (1) de commande de façon continue de récepteurs électriques selon le principe du retard à l'amorçage, comportant un élément (5) de commutation à semiconducteurs et un circuit (6) de commande destiné à donner des impulsions d'amorçage prévues pour la commande de l'élément (5) de commutation à semiconducteurs, ce circuit (6) de commande comprenant au moins un détecteur (SD) de passage de courant, un circuit (PLL) de production préalable d'impulsions d'amorçage, un élément (T) de circuit qui dépend du temps et une unité (D) de commutation et d'attaque,
    caractérisé en ce que
        à l'aide du détecteur (SD) de passage de courant et de l'élément (T) de circuit qui dépend du temps, on compare l'angle de conduction du courant de chaque alternance de courant à une valeur maximale admissible de l'angle de conduction du courant, et on arrête de commander l'élément (5) de commutation à semiconducteurs lorsque l'angle de conduction du courant dépasse cette valeur limite maximale admissible.

2.  Utilisation d'un dispositif suivant la revendication précédente pour la commande de la luminosité d'une lampe (4) à incandescence, la lampe à incandescence étant connectée à l'enroulement secondaire d'un transformateur (3), une borne de l'enroulement primaire du transformateur (3) étant connectée à un pôle de la source (U) de tension alternative, l'autre borne de l'enroulement primaire du transformateur (3) étant connectée à une électrode principale de l'élément (5) de commutation à semiconducteurs et l'autre électrode principale de cet élément (5) de commutation à semiconducteurs étant branchée à l'autre pôle de la source (U) de tension alternative.

# FIG 1

# FIG 2

## FIG 3

## FIG 4